# EUROPÄISCHE PATENTANMELDUNG

(11) **EP 4 465 106 A1**
(43) Veröffentlichungstag der Anmeldung: **20.11.2024**
(21) Anmeldenummer: 24174719.5
(22) Anmeldetag: 08.05.2024
(51) Int. Cl.: G02B 9/64, G01J 3/02, G01M 11/02, G02B 13/00

(54) **OBJEKTIVANORDNUNG, MESSVORRICHTUNG UND VERFAHREN ZUR VERMESSUNG EINES NEAR EYE DISPLAYS**

(30) Priorität: 19.05.2023 DE 102023113210
(71) Anmelder: TechnoTeam Holding GmbH, 98693 Ilmenau (DE)
(72) Erfinder: ROTSCHOLL, Ingo, 64289 Darmstadt (DE); KRÜGER, Udo, 99837 Werra-Suhl-Tal (DE); SCHRAMM, Stefan, 98660 Lengeld (DE); PORSCH, Tobias, 99092 Erfurt (DE)
(74) Vertreter: Liedtke & Partner Patentanwälte

(57) **Zusammenfassung**

Die Erfindung betrifft eine Objektivanordnung (101) umfassend eine Vorderblende (140), ein Objektiv (120) und eine Flüssiglinse (110), wobei das Objektiv (120) und die Flüssiglinse (110) entlang einer optischen Achse (OA, OA') an bezogen auf die Vorderblende (140) auf einer Bildseite (BS) liegenden Positionen fest angeordnet und zur Abbildung eines auf einer gegenüberliegenden Objektseite (OS) vor der Vorderblende (140) dargebotenen Abbildungsstrahlengangs in mindestens einer Sensorebene (S, S') eingerichtet sind. Die Flüssiglinse (110) ist in ihrer optischen Wirkung derart verstellbar, dass von einem menschlichen Betrachter scharf wahrnehmbare NED-Abbildungsstrahlengänge durch Anpassung der Flüssiglinse (110) scharf in der mindestens einen Sensorebene (S, S') abbildbar sind. Die Vorderblende (140) ist als Aperturblende für eine System-Eintrittspupille (EP) der Objektivanordnung (101) ausgebildet und weist eine Blendenöffnung von zwischen einem Millimeter und sechs Millimetern auf.

Die Erfindung betrifft ferner eine Messvorrichtung (100) zur Vermessung eines Near Eye Devices (NED) (20) umfassend eine solche Objektivanordnung (101) sowie ein Verfahren zur lichttechnischen Vermessung eines NEDs (20).

## Beschreibung

Die Erfindung betrifft eine Objektivanordnung mit einer Vorderblende, einem Objektiv und einer Flüssiglinse, wobei das Objektiv und die Flüssiglinse entlang einer optischen Achse an bezogen auf die Vorderblende auf einer Bildseite liegenden Positionen fest angeordnet und zur Abbildung eines auf einer gegenüberliegenden Objektseite in einem Bildabstand vor der Vorderblende dargebotenen virtuellen Bildes in mindestens einer Sensorebene eingerichtet sind.

Ferner betrifft die Erfindung eine Messvorrichtung zur Vermessung eines Near Eye Displays (NEDs) umfassend eine solche Objektivanordnung und einen Sensor.

Zudem betrifft die Erfindung ein Verfahren zur lichttechnischen Vermessung eines NEDs mit einer solchen Messvorrichtung.

Near Eye Displays (NED) (auch als Near Eye Devices bezeichnet) sind aus dem Stand der Technik als Vorrichtungen bekannt, mit denen ein Bild aus einem Abstand dargeboten wird, der deutlich kürzer als die Leseentfernung, typischerweise kürzer als 5 Zentimeter ist. NEDs sind in der Art von Brillen (beispielsweise als virtual reality (VR) Brillen, als augmented reality (AR) Brillen) bekannt, die mit Brillenbügeln, Tragegestellen und/oder Kopfbändern am Kopf eines Betrachters fixierbar sind. Sie weisen ein Anzeigeelement, beispielsweise ein light emitting diode (LED) Display auf. Ein darauf dargestelltes Bild wird mittels einer internen NED Optik dem Auge des Betrachters als virtuelles Bild dargeboten, das in einer scheinbaren Entfernung von der Augenpupillenebene entlang der Sehachse gegenüberliegend (auf der dem Betrachter abgewandten Seite des NEDs) liegt.

Die interne NED Optik kann fokussierbar sein, so dass virtuelle Bilder in verschiedenen Entfernungen dargeboten werden können. Verschiedene Fokussierzustände des NEDs werden durch entsprechende verschiedene Akkommodationszustände des Auges des Betrachters kompensiert, so dass das dargebotene Bild stets scharf erscheint.

Typischerweise werden virtuelle Bilder in einem Abstand von mindestens 20 Zentimetern vom Betrachterauge (entsprechend dem Leseabstand oder Nahbereich des menschlichen Auges) dargeboten. Hier und im Folgenden soll unter einem virtuellen Bild ein in einem solchen Abstand (vom Betrachterauge aus gesehen, hinter dem NED) dargebotenes virtuelles Bild im Sinne der Strahlenoptik verstanden werden.

Darüber hinaus sind auch NEDs bekannt, bei denen Bilder durch ausreichend schnelle Auslenkung eines kollimierten Laserstrahls oder eines vergleichbar kollimierten Strahlverlaufs einer anderen Lichtquelle auf die Retina des Betrachterauges projiziert werden (beispielsweise mittels eines mikromechanischen Systems mit auslenkbaren Mikrospiegeln). Auch mittels derartiger, als retinal writing oder retinal imaging bezeichneter Abbildungsverfahren können Bilder dargeboten werden, die vom Betrachterauge aus in einem Abstand erscheinen, der optional, beispielsweise mittels adaptiver Optik, variiert werden kann. Auch derartige NEDs können, damit das dargebotene Bild korrekt auf die Retina projiziert wird, eine Akkommodation des Betrachterauges auf einen festen oder sogar variablen Fokusabstand erfordern.

Hier und im Folgenden sollen Strahlverläufe, mit denen ein NED Bilder auf die Retina eines Betrachterauges projiziert, verallgemeinert als NED-Abbildungsstrahlengang bezeichnet werden, unabhängig davon, ob damit ein virtuelles Bild auf die Retina abgebildet wird oder ob eine Projektion durch schnell ausgelenkte kollimierte Strahlen erfolgt. In beiden Fällen erfordert eine genaue lichttechnische Vermessung eine Anpassung der Optik der Messvorrichtung analog zur Akkommodation des Betrachterauges.

Das Dokument US 2019/0191151 A1 beschreibt eine Vorrichtung und ein Verfahren zur Erfassung von Leistungsparametern eines konfigurierbaren NED umfassend einen Spiegel, eine Lampe, einen Strahlteiler, eine kollimierende und reflektive Linse zur Kollimierung von Licht, das vom Strahlteiler reflektiert wird, und zur Rück-Reflektierung dieses Lichtes zu einem Bildsensor mit einem Sucher, eine Sichtfeld-Blende zur Projektion von Licht der Lampe auf das zu vermessende NED durch eine Objektivlinse hindurch, eine digitale Sucherkamera zur Erfassung eines virtuellen Bildes des zu vermessenden NED, ein Spektroradiometer zur Durchführung spektroradiometrischer Messungen auf einem erfassten Bild eines vorbestimmten Messareals zur Beschreibung der Leistungsparameter des zu vermessenden NED sowie eine Controller-Schaltung zur Beschreibung der Leistungsparameter des zu vermessenden NED basierend auf den spektroradiometrischen Messungen.

Eine lichttechnische Vermessung derartiger NEDs erfordert zudem Messvorrichtungen, die ausreichend klein und beweglich sind, um in einen durch Brillenbügel, Tragegestell und ähnliche Haltevorrichtungen beschränkten Bau- und Bewegungsraum eingebracht zu werden. Zudem muss mit derartigen Messvorrichtungen das Akkommodationsverhalten (Veränderung der Brechkraft der Augenlinse) und das Adaptationsverhalten (Veränderung des Blendendurchmessers der als Eintrittspupille des Auges wirksamen Augenpupille) eines Betrachterauges nachbildbar sein. Ferner muss für eine korrekte Messung die Lage der Eintrittspupille der Messvorrichtung mit der Lage der Eintrittspupille des Auges (das heißt: der Augenpupille) übereinstimmen.

Bekannte lichttechnische Messvorrichtungen erfüllen diese Forderungen nicht oder nur unzureichend. Daher besteht ein Bedarf an einer verbesserten Messvorrichtung und an einem verbesserten Messverfahren zur Vermessung von NEDs.

Der Erfindung liegt gemäß einem ersten Aspekt die Aufgabe zu Grunde, eine Objektivanordnung anzugeben, die für die Verwendung in einer Messvorrichtung zur verbesserten lichttechnischen Vermessung von NEDs geeignet ist. Diese Aufgabe wird mit einer Objektivanordnung mit den Merkmalen des Anspruchs 1 erfindungsgemäß gelöst.

Der Erfindung liegt ferner gemäß einem zweiten Aspekt die Aufgabe zu Grunde, eine Messvorrichtung anzugeben, die zur verbesserten lichttechnischen Vermessung von NEDs geeignet ist. Diese Aufgabe wird mit einer Messvorrichtung mit den Merkmalen des Anspruchs 10 erfindungsgemäß gelöst.

Der Erfindung liegt ferner gemäß einem dritten Aspekt die Aufgabe zu Grunde, ein Verfahren zur verbesserten lichttechnischen Vermessung von NEDs anzugeben. Diese Aufgabe wird mit einem Verfahren mit den Merkmalen des Anspruchs 13 erfindungsgemäß gelöst.

Vorteilhafte Ausgestaltungen der Erfindung sind Gegenstand der Unteransprüche.

Eine Messvorrichtung zur lichttechnischen Vermessung, beispielsweise photometrischen und/oder colorimetrischen und/oder spektralen Vermessung eines Near Eye Displays (NED) umfasst eine Objektivanordnung zur Abbildung eines von dem NED dargebotenen Abbildungsstrahlengangs, beispielsweise eines Abbildungsstrahlengangs zur Abbildung eines virtuellen Bildes oder eines für ein retinal writing eingerichteten Abbildungsstrahlengangs, auf eine Sensorfläche eines Sensors.

Gemäß einem ersten Aspekt der Erfindung umfasst eine dafür eingerichtete Objektivanordnung eine Vorderblende, ein Objektiv und eine in ihrer optischen Wirkung, insbesondere in ihrer Brechkraft, veränderbare Flüssiglinse. Das Objektiv und die Flüssiglinse sind entlang einer optischen Achse fest, das heißt: entlang der optischen Achse unbeweglich, angeordnet, und liegen bezogen auf die Vorderblende auf einer Bildseite. Die Flüssiglinse kann als Teil des Objektivs ausgebildet, insbesondere baulich mit diesem verbunden, oder unabhängig von dem Objektiv bereitgestellt sein.

Das Objektiv und die Flüssiglinse sind zur Abbildung des von einem NED dargebotenen Abbildungsstrahlengangs in mindestens einer Sensorebene eingerichtet und angeordnet, wobei der Abbildungsstrahlengang auf der der Bildseite gegenüberliegenden Seite der Vorderblende (die im Folgenden als Objektseite bezeichnet werden soll) dargeboten wird. Die Vorderblende ist somit in Richtung eines zu vermessenden NEDs (das den Abbildungsstrahlengang darbietet) vor dem Objektiv und der Flüssiglinse angeordnet.

Die Flüssiglinse ist in ihrer optischen Wirkung, insbesondere in ihrer Brennweite verstellbar. Insbesondere ist die Flüssiglinse in einer zur Akkommodationsfähigkeit des menschlichen Auges von etwa 10 Dioptrien analogen Veränderung der Brechkraft derart eingerichtet, dass ein Abbildungsstrahlengang, der von einem NED für verschiedene Akkommodationszustände eines Betrachterauges dargeboten wird, durch Anpassung der Flüssiglinse scharf in der mindestens einen Sensorebene abbildbar sind. Die Vorderblende ist als Aperturblende für eine System-Eintrittsapertur der Objektivanordnung ausgebildet und weist eine Blendenöffnung auf, die in den Bereich fällt, in dem die Blendenöffnung (der Durchmesser) einer Augenpupillenöffnung eines menschlichen Auges durch Adaptation veränderbar ist. Bevorzugt weist die Vorderblende eine Blendenöffnung mit einem Durchmesser von zwischen zwei Millimetern und sechs Millimetern auf.

Unter der System-Eintrittsapertur ist hierbei der gemeinsame Querschnitt aller in die Objektivanordnung eintretenden homozentrischen Strahlenbündel zu verstehen.

Die Objektivanordnung hat den Vorteil, dass die von der Vorderblende gebildete Eintrittspupille von außen zugänglich ist. Dadurch kann sie, beispielsweise bezogen auf ein NED, sehr genau positioniert werden. Ferner kann sie besonders leicht manipuliert werden, beispielsweise gegen eine Vorderblende mit anderer Blendenöffnung ausgetauscht oder, wenn sie als verstellbare Blende ausgebildet ist, in der Blendenöffnung verändert werden.

Ferner hat die Objektivanordnung den Vorteil, dass mittels der verstellbaren, vorzugsweise fokussierbaren Flüssiglinse für unterschiedliche Akkommodationszustände eines Betrachterauges von einem NED dargebotene Abbildungsstrahlengänge scharf auf die mindestens eine Sensorebene abgebildet werden, ohne dass hierfür eine mechanische Bewegung der Objektivanordnung oder einer darin umfassten Komponente erforderlich ist. Dadurch wird gegenüber bekannten Lösungen fokussierbarer Objektivanordnungen, die einen Verfahrbereich für Linsen oder Linsengruppen erfordern, Platz gespart. Insbesondere ist dadurch eine besonders geringe Länge der Objektivanordnung in Richtung einer die Vorderblende senkrecht durchstoßenden optischen Achse möglich.

Eine derartige Objektivanordnung kann daher besonders vorteilhaft für Messsituationen mit begrenzter Bewegungsfreiheit, beispielsweise für die Abbildung von virtuellen Bildern eines NEDs auf einen zur lichttechnischen Messung verwendeten Sensor eingesetzt werden.

Bei direkt (das heißt: in der Art von retinal writing beispielsweise mittels eines Laserstrahls) projizierenden NEDs sorgt üblicherweise eine interne NED Optik dafür, dass die auf das Betrachterauge projizierten Strahlen des Abbildungsstrahlengangs Hauptstrahlen sind, die durch den Hauptpunkt des Betrachterauges verlaufen. Dadurch wird erreicht, dass auch bei Akkommodation des Betrachterauges ein immer gleich großes, scharfes Bild auf dessen Retina erzeugt wird. Es ist bekannt, dass sich die Lage des Hauptpunktes in einem Betrachterauge bei Akkommodation verschieben kann.

In einer Ausführungsform einer Objektivanordnung, die für die Vermessung von solchen direkt projizierenden NEDs eingerichtet ist, ist die Flüssiglinse derart angeordnet und eingerichtet, dass durch Veränderung ihrer Brechkraft das Auffinden des Hauptpunktes ermöglicht wird. Dadurch ist es möglich, auch potenziell weitere, durch die Akkommodation ausgelöste Effekte zu untersuchen.

Bei einer Ausführungsform der Objektivanordnung sind das Objektiv und die Flüssiglinse zur Abbildung eines auf einer gegenüberliegenden Objektseite in einem Bildabstand vor der Vorderblende dargebotenen virtuellen Bildes in mindestens einer Sensorebene eingerichtet, wobei die Flüssiglinse in ihrer optischen Wirkung derart verstellbar ist, dass in einem Fokusbereich dargebotene virtuelle Bilder durch Anpassung der Flüssiglinse scharf in der mindestens einen Sensorebene abbildbar sind.

Insbesondere ist die Flüssiglinse in ihrer Brechkraft derart verstellbar, dass virtuelle Bilder, die in einem Fokusbereich dargeboten werden, der durch Akkommodation eines (an Stelle der Messvorrichtung) das NED erfassenden Betrachterauges scharf auf dessen Retina abbildbar ist, scharf in der mindestens einen Sensorebene abbildbar ist. Mit anderen Worten: die Flüssiglinse ist in Verbindung mit dem Objektiv für die Abbildung von virtuellen Bildern auf die mindestens eine Sensorebene eingerichtet, deren Bildabstand in den Fokusbereich fällt.

In einer Ausführungsform ist die Vorderblende als Wechselblende mit diskret verstellbarer Blendenöffnung oder als Irisblende mit stufenlos verstellbarer Blendenöffnung ausgebildet. Diese Ausführungsform eignet sich für Messungen mit verschiedenen Eingangsaperturen, beispielsweise für lichttechnische Messungen von NEDs, die korrespondierend zu verschiedenen Adaptationszuständen eines Betrachterauges vorgenommen werden.

Bei einer Ausführungsform ist die Flüssiglinse bildseitig zwischen der Vorderblende und dem Objektiv angeordnet. Dadurch kann eine Flüssiglinse eingesetzt werden, deren Durchmesser im Vergleich zum Durchmesser des nachgeordneten Objektivs klein ist und die dementsprechend kostengünstiger und/oder genauer zu fertigen ist.

Bei einer Ausführungsform weisen die Flüssiglinse und das Objektiv einen Durchmesser von höchstens 32,5 Millimetern auf. Diese Ausführungsform ist kostengünstig herstellbar und für viele Messzwecke, beispielsweise für die lichttechnische Vermessung von NEDs, ausreichend, insbesondere dann, wenn die Objektivanordnung in aufeinanderfolgenden Messungen gegenüber dem NED geschwenkt wird, so dass ein vom NED dargebotenes virtuelles Bild in überlappenden Raumwinkeln erfasst wird.

Bei einer Ausführungsform ist das Objektiv für einen bildseitig entozentrischen Strahlengang oder für einen bildseitig telezentrischen Strahlengang eingerichtet.

Ein entozentrischer Strahlengang ermöglicht die Verwendung eines Sensors mit einer gegenüber dem Querschnitt der Objektivanordnung größeren Sensorfläche. Dadurch sind mit verhältnismäßig kleinen und entsprechend kostengünstigen Objektiven verhältnismäßig große und entsprechend genaue Sensoren verwendbar.

Ein telezentrischer Strahlengang ermöglicht eine gegenüber dem Abstand zur Objektivanordnung variable und somit besonders robuste Anordnung des Sensors ohne Beeinflussung des Abbildungsmaßstabs.

Bei einer Ausführungsform weist das Objektiv eine erste Objektivgruppe auf, die zur Abbildung des eintrittsseitig von der Objektivanordnung dargebotenen virtuellen Bildes in ein Zwischenbild in einer Zwischenebene eingerichtet ist. Ferner weist das Objektiv mindestens eine davon baulich getrennte, vorzugsweise unabhängig gefasste zweite Objektivgruppe auf, die im Strahlengang der ersten Objektivgruppe nachgeordnet und zur Abbildung des Zwischenbildes in die mindestens eine Sensorebene eingerichtet ist.

Durch die bauliche Trennung des Objektivs ist eine Anordnung nur der ersten, gegenüber dem Objektiv insgesamt vergleichsweise kleinen Objektivgruppe in unmittelbarer Nähe eines abzubildenden Messobjekts möglich, während die mindestens eine nachgeordnete zweite Objektivgruppe abgesetzt davon angeordnet werden kann. Dadurch wird auch bei beschränktem Bau- und Bewegungsspielraum eine Messung mit hoher optischer Qualität, beispielsweise durch eine beugungsbegrenzt genaue Abbildung des virtuellen Bildes auf die Sensorebene, ermöglicht.

Bei einer Weiterbildung dieser Ausführungsform ist in der Zwischenebene eine Feldlinse angeordnet, die zur Anpassung einer ersten Austrittspupille der ersten Objektivgruppe an eine zweite Eintrittspupille der zweiten Objektivgruppe eingerichtet ist. Dadurch kann der Durchmesser der ersten Objektivgruppe gleich dem Durchmesser der zweiten Objektivgruppe gewählt werden. Dies ermöglicht eine besonders platzsparende, schlanke Bauform der Objektivanordnung.

Alternativ oder zusätzlich kann die Feldlinse zur Korrektur einer Aberration eingerichtet sein, beispielsweise zur Korrektur eines Astigmatismus oder einer Bildfeldwölbung. Dadurch wird die optische Qualität der Abbildung weiter verbessert.

Bei einer Ausführungsform umfasst die Objektivanordnung mindestens einen Strahlumlenker, beispielsweise einen Umlenkspiegel oder ein Umlenkprisma, mit dem der Strahlengang mindestens eines optischen Pfads gegenüber einer ersten, senkrecht durch die Vorderblende verlaufenden optischen Achse geneigt und/oder versetzt laufend umgelenkt wird. Dadurch wird Bauraum in Richtung der ersten optischen Achse gespart. Diese Ausführungsform eignet sich somit besonders für die lichttechnische Vermessung von Messobjekten, bei denen der Raum für die Anordnung einer Messvorrichtung in Abstrahlrichtung des Messobjekts beschränkt ist, beispielsweise für die lichttechnische Vermessung von NEDs, bei denen Brillenbügel oder ähnliche Halterungen in den Bereich um eine Sehachse hineinragen.

Bei einer Ausführungsform ist im Strahlengang der Objektivanordnung bildseitig nach der Flüssiglinse mindestens ein Strahlteiler derart angeordnet, dass er den Strahlengang in örtlich korrespondierende Abbildungen des virtuellen Bildes entlang eines ersten optischen Pfads auf eine erste Sensorebene und entlang mindestens eines weiteren optischen Pfads auf jeweils eine weitere Sensorebene aufteilt. Dadurch sind zeitgleich korrespondierende ortsaufgelöste Messungen, beispielsweise mit einer ersten Leuchtdichtekamera sowie mit einer zweiten Leuchtdichtekamera und/oder einer Farbmesskamera und/oder einer Machine Vision Kamera und/oder einer Lichtfeldkamera und/oder einem Spektrometer möglich.

Gemäß einem zweiten Aspekt umfasst eine Messvorrichtung zur Vermessung eines NEDs eine Objektivanordnung gemäß dem ersten Aspekt der Erfindung sowie mindestens einen, in jeweils einer Sensorebene angeordneten, für eine photometrische und/oder colorimetrische und/oder spektrometrische Vermessung eingerichteten Sensor. Bevorzugt ist mindestens ein Sensor als ortsauflösender flächiger Sensor ausgebildet, es kann dies jedoch auch ein punktförmig oder über eine Sensorfläche integrierend messender Sensor sein.

Die vorgeschlagene Messvorrichtung ist besonders für den (beispielsweise durch Brillenbügel oder ähnliche Halterungen) beschränkten Bauraum bildseitig von einem NED geeignet. Zudem kann sie aufgrund der von außen zugänglichen Vorderblende besonders leicht und genau in eine Position gebracht werden, die der Position der Augenpupille eines Betrachterauges entspricht. Dadurch ist eine besonders genaue (mit der Wahrnehmung durch das Betrachterauge übereinstimmende) Vermessung des NEDs möglich. Zudem ist die Messvorrichtung durch Verstellen der Flüssiglinse an verschiedene Fokussierzustände des NEDs anpassbar, wobei die Position der System-Eintrittspupille (und somit die Übereinstimmung der Messung mit der Wahrnehmung durch ein Betrachterauge) unverändert bleibt.

Weitere Vorteile der Messvorrichtung entsprechen denen der Objektivanordnung gemäß dem ersten Aspekt der Erfindung.

Bei einer Ausführungsform ist die Messvorrichtung entlang einer Schwenkachse schwenkbar ausgebildet. Die Schwenkachse verläuft senkrecht zu einer ersten optischen Achse, die senkrecht die Vorderblende durchstößt. Die Schwenkachse schneidet diese erste optische Achse in einem Abstand von der Vorderblende, der näherungsweise gleich zum Abstand des Drehpunktes eines menschlichen Auges von dessen Augenpupille ist.

Durch Schwenken der Messvorrichtung kann ein jeweils anderer Ausschnitt des von einem NED dargebotenen Bildes erfasst werden. Dabei bleibt die Korrespondenz zur Wahrnehmung durch ein menschliches Betrachterauge bestehen, weil der Drehpunkt des Auges und der Drehpunkt der Schwenkung (das heißt: der Schnittpunkt zwischen der Schwenkachse und der ersten optischen Achse) in gleichem Abstand zur jeweils wirksamen Eintrittspupille (der Vorderblende beziehungsweise der Augenpupille / Augeniris) liegen.

Durch die Schwenkbarkeit ist es ausreichend, wenn die Messvorrichtung in jeder Schwenklage nur einen Teilbereich (das heißt: nur einen gewissen Raumwinkel) des virtuellen Bildes auf dem mindestens einen Sensor erfasst. Durch aufeinanderfolgende Messungen mit überlappenden Teilbereichen kann dennoch das vom vermessenen NED insgesamt dargebotene virtuelle Bild ausgewertet werden. Dies ermöglicht einen besonders schlanken, Bauraum sparenden Aufbau der Messanordnung.

Bei einer Ausführungsform ist in mindestens einem optischen Pfad der Messvorrichtung ein optisches Filter angeordnet. Das optische Filter weist eine auf die spektrale Empfindlichkeit des Gesamtsystems aus Objektiv und Sensor der Messvorrichtung gemäß einer vorgegebenen Zielfunktion abgestimmte Transmissionscharakteristik auf. Die Zielfunktion kann beispielsweise von der typischen spektralen Empfindlichkeit eines Betrachters bei photopischem, skotopischem oder circadianem Sehen, von einem aktinischen Wirkspektrum oder einer ähnlichen auf das Betrachterauge bezogenen Lichtwirkung bestimmt sein. Das optische Filter kann in Ausführungsformen als photometrisches oder als colorimetrisches Filter eingerichtet sein. Dadurch sind besonders genaue und/oder spezifische photometrische/radiometrische beziehungsweise colorimetrische Messungen möglich.

Gemäß einem dritten Aspekt der Erfindung wird bei einem Verfahren zur lichttechnischen Vermessung eines NEDs mit einer Messvorrichtung nach dem ersten Aspekt der Erfindung mindestens eine optische Störung, die in Wechselwirkung des vermessenen NEDs mit der Objektivanordnung auftritt, durch Auswertung der mit dem mindestens einen Sensor erfassten Messung rechnerisch korrigiert. Beispielsweise können als Streulicht, Fehllicht und/oder Mehrfachreflexion auftretende optische Störungen rechnerisch (das heißt: mittels eines auf einem Computer implementierten Algorithmus) korrigiert werden.

Dadurch kann auf die Unterdrückung von derartigen optischen Störungen durch externe physische Blenden verzichtet werden, wie sie bei der Vermessung beispielsweise großflächiger Displays üblicherweise eingesetzt werden, wie sie aber aufgrund der räumlichen und optischen Beschränkungen für NEDs nicht anwendbar sind. Durch die rechnerische Korrektur kann beispielsweise der Kontrastumfang vergrößert und somit die Leistungsfähigkeit der Messvorrichtung verbessert werden.

Ausführungsbeispiele der Erfindung werden im Folgenden anhand von Zeichnungen näher erläutert. Darin zeigen:
- Figur 1: schematisch ein aus dem Stand der Technik bekanntes Near Eye Device (NED),
- Figur 2A, 2B: schematisch eine Messvorrichtung zur Vermessung eines Near Eye Devices in verschiedenen Schwenklagen,
- Figur 3A, 3B: schematisch einen bildseitig entozentrischen beziehungsweise telezentrischen Strahlengang durch eine Messvorrichtung,
- Figur 4: eine Objektivanordnung mit kollinear angeordneten, optisch über eine Zwischenebene getrennten Objektivgruppen,
- Figur 5: eine Objektivanordnung mit getrennten Objektivgruppen und einer in der Zwischenebene angeordneten Feldlinse,
- Figur 6: eine Objektivanordnung mit getrennten Objektivgruppen und einem in der Zwischenebene angeordneten Umlenkspiegel,
- Figur 7: eine Objektivanordnung mit getrennten Objektivgruppen und einer in der Zwischenebene angeordneten Feldlinse sowie einem in der zweiten Objektivgruppe angeordneten Umlenkspiegel,
- Figur 8: eine Messvorrichtung mit einem entlang zweier nachgeordneter Objektivgruppen über die volle Apertur zweigeteiltem Strahlverlauf und zwei Sensoren,
- Figur 9: eine Messvorrichtung mit einem entlang zweier nachgeordneter Objektivgruppen über eine Teilapertur zweigeteilten Strahlverlauf und zwei Sensoren sowie
- Figur 10: eine Messvorrichtung mit einer in einer nachgeordneten Objektivgruppe angeordneten Flüssiglinse.

Einander entsprechende Teile sind in allen Figuren mit den gleichen Bezugszeichen versehen.

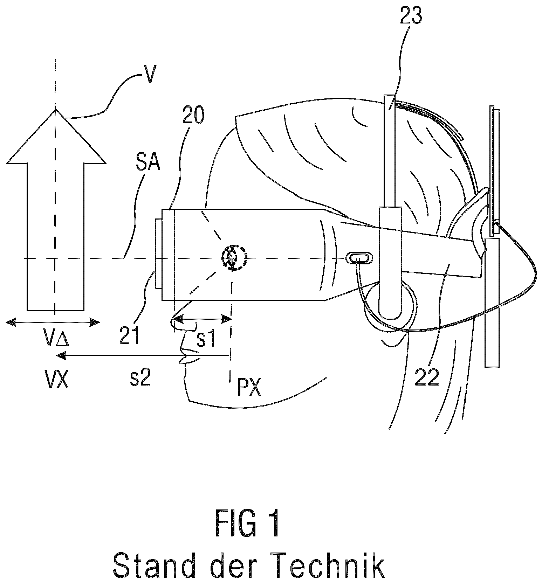

**Figur 1** zeigt schematisch ein aus dem Stand der Technik bekanntes Near Eye Device (NED) 20 in der Art einer Video- oder VR (virtual reality) Brille. NEDs 20, auch als Near Eye Display oder als Head Mounted Display bezeichnet, sind für eine Projektion in das menschliche Auge aus einem Abstand vorgesehen, der kürzer als die ideale Leseentfernung, typischerweise sogar kürzer als 5 Zentimeter ist. NEDs 20 weisen zur Fixierung am menschlichen Kopf typischerweise Brillenbügel 22 und/oder ein Kopfband 23 oder ein ähnliches am Kopf zu befestigendes Tragegestell auf.

Entlang einer Sehachse SA nimmt das betrachtende Auge Bilder wahr, die von einem schematisch dargestellten internen Anzeigeelement 21 des NEDs 20 dargeboten werden. Solche Anzeigeelemente 21 können beispielsweise als Felder (Matrizen) von light emitting diodes (LEDs) ausgebildet sein.

Das NED 20 wird mittels des Brillenbügels 22 und/oder Kopfbands 23 so fixiert, dass sich die Augenpupille des betrachtenden Auges relativ zur Sehachse SA an einer Pupillenposition PX in einem Abstand s1 von dem Anzeigeelement 21 befindet. Üblicherweise umfasst ein NED 20 eine in Figur 1 nicht näher dargestellte interne Abbildungsoptik zur Abbildung des auf dem Anzeigeelement 21 dargestellten (reellen) Bildes in ein virtuelles, typischerweise vergrößertes Bild V in einem scheinbar (gegenüber dem tatsächlichen Abstand s1 des Anzeigeelements 21 von der Pupillenposition PX) vergrößerten Bildabstand s2 an der Bildposition VX.

Die interne Abbildungsoptik des NEDs 20 kann fokussierbar ausgebildet sein. Dadurch kann das virtuelle Bild V in seiner Lage (das heißt: in seiner Bildposition VX im Bildabstand s2 von der Pupillenposition PX) innerhalb eines Fokusbereichs VΔ verändert werden. Eine solche Veränderung wird durch Akkommodation des Auges (das heißt: durch Änderung der Brechkraft der Augenlinse) so kompensiert, dass auf die Retina des Auges auch bei verschiedenen Fokussierzuständen des NEDs 20 stets ein scharfes Bild abgebildet wird, das in dem jeweiligen Akkommodationszustand entsprechend in unterschiedlichen Bildabständen s2 von der Pupillenposition PX erscheint.

Der mechanische Aufbau eines NEDs 20, insbesondere der sehr geringe Abstand zwischen dem Anzeigeelement 21 und der Augenpupille an der Pupillenposition PX, erschwert die lichttechnische Vermessung von NEDs 20. Insbesondere ist der bildseitige, dem betrachtenden Auge zugewandte Bau- und Bewegungsraum für die Anordnung einer (in Figur 1 nicht dargestellten) Messvorrichtung 100 beschränkt, beispielsweise durch das Kopfband 23 und/oder die Brillenbügel 22.

Eine derartige Beschränkung erschwert in besonderem Maß die Vermessung von fokussierbaren NEDs 20, da hier der Fokussierzustand der Messvorrichtung 100 für verschiedene Lagen des virtuellen Bildes V im Fokusbereich VΔ jeweils angepasst werden muss. Aus dem Stand der Technik bekannte Messvorrichtungen verwenden zur Anpassung ihres Fokussierzustands entlang der Sehachse SA verstellbare optische Elemente. Der dafür erforderliche Verfahrbereich kollidiert jedoch mit den genannten Beschränkungen des Bau- und Bewegungsraums.

Daher besteht ein Bedarf an einer Messvorrichtung 100, die mit dem verfügbaren beschränkten Bau- und Bewegungsspielraum auskommt und dennoch eine hohe optische Qualität und Messgenauigkeit aufweist.

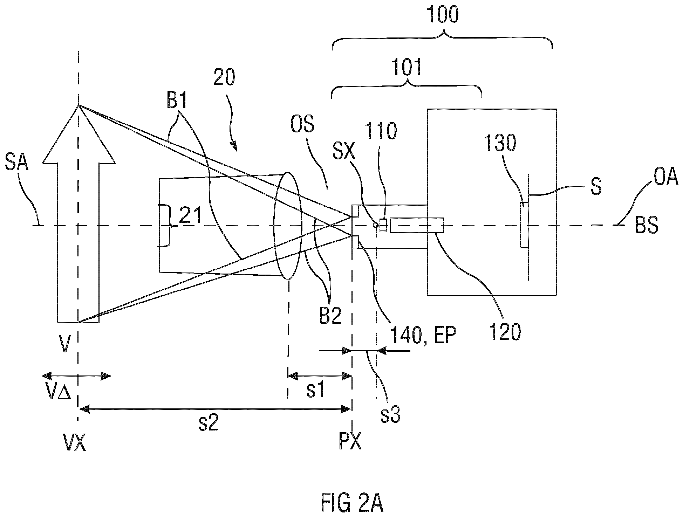

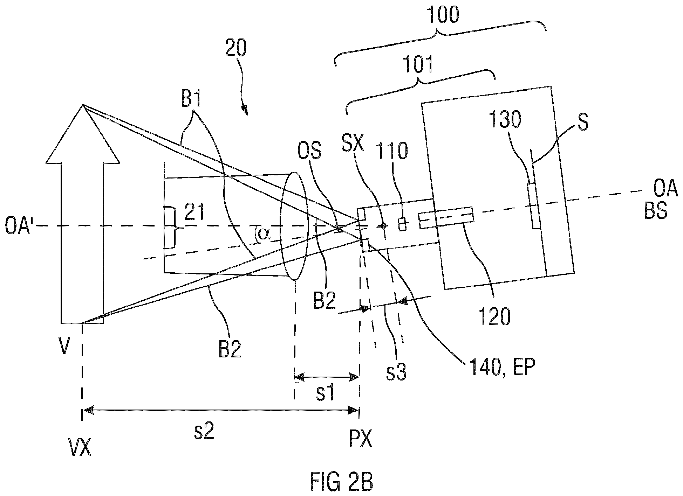

**Figur 2A** und **Figur 2B** zeigen rein schematisch ein Near Eye Device (NED) 20 und eine Messvorrichtung 100 zu dessen optischer Vermessung. Die Messvorrichtung 100 ist für eine Vermessung, beispielsweise eine photometrische oder colorimetrische Vermessung des NEDs 20 wie in den Figuren 2A und 2B dargestellt an der Stelle angeordnet, an der sich (gemäß Figur 1) das betrachtende menschliche Auge befindet. In Figur 2A stimmt die optische Messachse OA (das heißt: die optische Achse OA der Messvorrichtung 100) mit der Sehachse SA eines das NED 20 gemäß Figur 1 betrachtenden Auges überein.

Die Messvorrichtung 100 umfasst einen Sensor 130, der in einer Sensorebene S senkrecht zur optischen Messachse OA liegt, und eine Objektivanordnung 101, die zur Abbildung eines vom NED 20 dargebotenen virtuellen Bildes V auf die Sensorebene S eingerichtet ist.

Für eine korrekte Vermessung muss insbesondere die System-Eintrittspupille EP der Messanordnung 100 an dem für die Anwendung des NEDs 20 vorgesehenen Ort der Augenpupille liegen, das heißt: an derselben Pupillenposition PX wie die Augenpupille des in Figur 1 dargestellten betrachtenden Auges. Hierfür weist die Messanordnung 100 eine Vorderblende 140 auf, die an der Pupillenposition PX auf der Sehachse SA angeordnet wird.

Der vom NED 20 ausgehende Strahlverlauf ist vereinfacht lediglich anhand von Strahlenbündeln B1, B2 der Randstrahlen skizziert.

Es sind NEDs 20 bekannt, bei denen Bilder mehrerer interner Anzeigeelemente 21 und/oder (bei augmented reality (AR) Brillen) Bilder der Umgebung überlagert werden. Zur vereinfachten Darstellung wird das Prinzip der vorgeschlagenen Messvorrichtung 100 anhand von lediglich einem internen Anzeigeelement 21 erläutert. Dieses Prinzip ist auf die Vermessung von NEDs 20 mit mehreren internen Anzeigeelementen 21 übertragbar.

In einer dem Auge entsprechenden Weise muss bei fokussierbaren NEDs 20 auch die Objektivanordnung 101 an verschiedene Fokussierzustände des NEDs 20 anpassbar sein. Dabei darf die Pupillenposition PX nicht verändert werden.

Die Bauweise eines NEDs 20, beispielsweise eines als VR Brille ausgelegten NEDs 20 mit Brillenbügeln 22 und/oder einem Kopfband 23 beschränkt den Bauraum und die Beweglichkeit der Messvorrichtung 100. Insbesondere muss die Objektivanordnung 101 entsprechend schlank gebaut sein, um Kollisionen mit dem NED 20 zu vermeiden.

Für eine möglichst genaue Vermessung sollte die Objektivanordnung 101 beugungsbegrenzt sein. Sofern Aberrationen, beispielsweise chromatische Aberrationen, unvermeidbar sind, sollten sie jedenfalls so ausgelegt sein, dass dadurch Aberrationen der internen Optik des NEDs 20 nicht kompensiert werden, um das Messergebnis nicht (positiv) zu verfälschen.

Die Objektivanordnung 101 umfasst eine Flüssiglinse 110 und ein Objektiv 120, die linear entlang der optischen Messachse OA der Messvorrichtung 100 hinter der Vorderblende 140, das heißt: in Richtung zu einer dem NED 20 abgewandten Bildseite BS aufgefädelt angeordnet sind. Eine der Bildseite BS entlang der optischen Messachse OA gegenüberliegende Objektseite OS weist auf das NED 20 zu.

Das Objektiv 120 bildet, analog zur Erzeugung eines Bildes auf der Retina, aus dem NED 20 in die Messvorrichtung 100 unter verschiedenen Winkeln eintreffende Feldstrahlen (schematisch durch die Strahlenbündel B1, B2 der Randstrahlen veranschaulicht) auf den zweidimensionalen Sensor 130 ab, der in der senkrecht zur optischen Messachse OA liegenden ersten Sensorebene S angeordnet ist.

Der Sensor 130 ist zur ortsaufgelösten Messung photometrischer und/oder colorimetrischer Kenngrößen des NED 20 ausgebildet, beispielsweise zur Messung einer Leuchtdichte oder zur Messung von Parametern einer spektralen Zusammensetzung des Lichtes, das von dem NED 20 emittiert wird.

Eintritts- oder objektseitig (das heißt: an der der Sensorebene S gegenüberliegenden Objektseite OS) weist die Objektivanordnung 101 eine Vorderblende 140 auf, die vor allen optisch wirksamen Elementen der Messvorrichtung 100 angeordnet ist und eine zur optischen Messachse OA konzentrische kreisrunde Öffnung aufweist, die als System-Eintrittspupille EP der Messvorrichtung 100 wirkt.

Die Vorderblende 140 ist, bezogen auf das NED 20, an der Pupillenposition PX angeordnet, das heißt: an der Stelle, an der sich typischerweise die Pupille des menschlichen Auges befinden würde, wenn das NED 20 an einem menschlichen Kopf (beispielsweise mit Brillenbügeln 22 und/oder einem Kopfband 23 oder einem ähnlichen Tragegestell) fixiert wäre.

Der Durchmesser der System-Eintrittspupille EP ist, analog zum Pupillendurchmesser des menschlichen Auges, aus einem Bereich von etwa zwei Millimetern und sechs Millimetern gewählt und kann insbesondere auch variabel sein.

Die Flüssiglinse 110 kann in nachfolgend noch genauer erläuterter Weise in ihrer optischen Wirkung, insbesondere in ihrer Brechkraft, durch elektrische Ansteuerung verändert werden, insbesondere ohne mechanische Veränderung ihrer Lage oder Position relativ zum Objektiv 120 oder relativ zur Messvorrichtung 100.

Mit einer Änderung der Brechkraft der Flüssiglinse 110 (auch als tunable lens bezeichnet) kann eine Veränderung des Fokussierzustandes des NEDs 20 analog zur Akkommodation des Auges so kompensiert werden, dass stets ein scharfes Abbild des virtuellen Bildes V auf der Sensorebene S erzeugt wird, solange das virtuelle Bild V innerhalb des Fokusbereichs VΔ des NEDs 20 dargeboten wird.

Zudem kann die optische Wirkung des Objektivs 120 durch Veränderung der Flüssiglinse 110 korrigiert werden.

Eine Fokussierung der Abbildung des virtuellen Bildes V auf die Sensorebene S mit Hilfe der Flüssiglinse 110 hat den Vorteil, dass keine optischen Elemente bewegt oder die Schnittweite der optischen Anordnung (das heißt: der Abstand des Objektivs 120 zum Anzeigeelement 21 des NEDs 20 und/oder zum Sensor 130) verändert werden muss.

Die Flüssiglinse 110 ermöglicht eine schnelle Fokussierung der Abbildung des virtuellen Bildes V auf den Sensor 130. Ferner wird durch die Verwendung der Flüssiglinse 110 eine Messvorrichtung 100 ermöglicht, die besonders klein ist, da sie ohne mechanisch bewegte optische Komponenten, insbesondere ohne mechanische Bewegung des Objektivs 120 oder einzelner Teile des Objektivs 120 auskommt.

Dadurch kann eine gute Abbildung auch für einen Bau- und Bewegungsraum gebildet werden, der aufgrund der mechanischen und/oder optischen Restriktionen eines NEDs 20 (beispielsweise durch Brillenbügel 22 oder Kopfband 23 sowie durch die für einen sehr kurzen Abstand zum Auge vorgesehene Projektion) typischerweise besonders stark beschränkt ist. Zudem ermöglicht der Verzicht auf mechanisch bewegte Komponenten in der Messvorrichtung 100 eine besonders genaue und reproduzierbare Vermessung eines NEDs 20.

Ein Betrachter kann zur Wahrnehmung verschiedener Bereiche des von dem NED 20 dargestellten Bildes sein Auge schwenken und so die Sehachse SA in eine gegenüber der Figur 1 dargestellten Lage veränderte Ausrichtung bringen. In entsprechender Weise müssen, damit verschiedenen Punkte des von dem Anzeigeelement 21 des NEDs 20 emittierten Objektfelds vermessen werden können, auch die Objektivanordnung 101 und mit ihr auch der Sensor 130 der Messvorrichtung 100 relativ zum Anzeigeelement 21 um eine Schwenkachse SX relativ zum NED 20 schwenkbar sein. Dadurch wird erreicht, dass Anordnung und Lage der System-Eintrittspupille EP gegenüber dem Sensor 130 beim Schwenken der Messvorrichtung 100 in gleicher Weise erhalten bleiben wie Anordnung und Lage der Augenpupille gegenüber der Retina beim Schwenken (Drehen) eines Betrachterauges.

Die Schwenkachse SX verläuft senkrecht zur und durch die optische Messachse OA in einem Abstand s3 hinter (das heißt: bildseitig von) der durch die Vorderblende 140 gebildeten System-Eintrittspupille EP. Dieser Abstand s3 ist näherungsweise gleich zum typischen Abstand des Drehpunktes eines menschlichen Auges von dessen Augenpupille gewählt, der im Rahmen der individuellen Variationen mit etwa 10 Millimetern angenommen werden kann.

In der Darstellung von Figur 2A stimmt die optische Messachse OA mit einer senkrecht zum Anzeigeelement 21 des NEDs 20 ausgerichteten Sehachse SA eines Betrachterauges gemäß Figur 1 näherungsweise überein. Figur 2B zeigt davon abweichend eine Anordnung des NEDs 20 und der Messvorrichtung 100 mit dem Unterschied, dass die Messvorrichtung 100 um die Schwenkachse SX um einen Schwenkwinkel *α* geschwenkt ist. Die Schwenkachse SX verläuft dabei näherungsweise durch den Drehpunkt eines Betrachterauges gemäß Figur 1.

Indem die Messvorrichtung 100 zum NED 20 schwenkbar angeordnet ist, kann eine Änderung der Blickrichtung und/oder eine veränderte Lage des NEDs 20 relativ zum Auge nachvollzogen werden. Mit anderen Worten: es ist dadurch die Vermessung eines Bildes möglich, das in gleicher Weise unter verändertem Blickwinkel der Sehachse SA relativ zum NED 20 und/oder in veränderter Lage des NEDs 20 auch in einem Auge eines Betrachters abgebildet werden würde.

Zudem kann durch die Schwenkbarkeit der Messvorrichtung 100 das von dem Sensor 130 erfasste Bildfeld beschränkt werden. Dadurch kann das Objektiv 120 durch eine kompakte teleskopische Anordnung realisiert werden.

Anhand weiterer Figuren werden der Aufbau und die optische Wirkungsweise der Messvorrichtung 100 genauer erläutert.

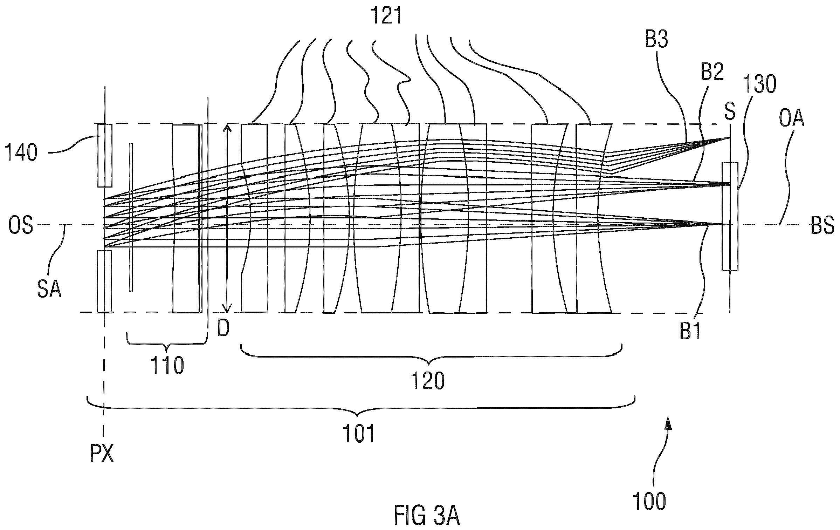

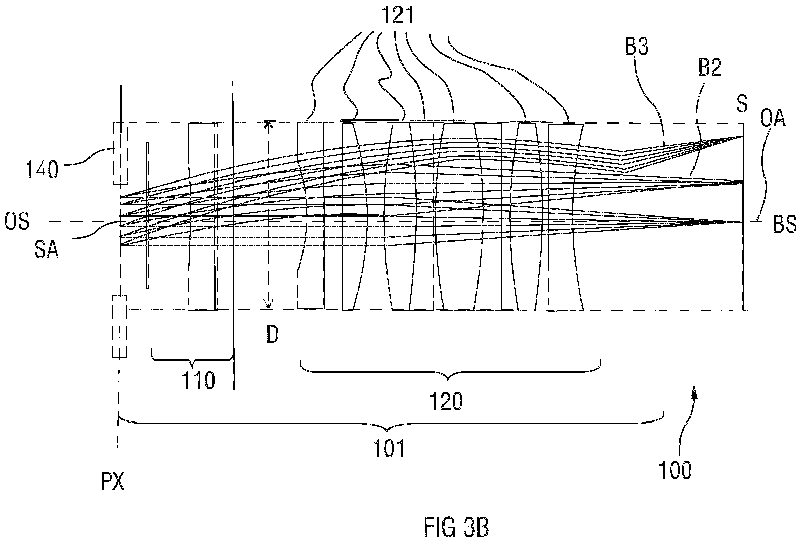

Die **Figuren 3A** **und** **3B** zeigen jeweils einen schematischen Strahlengang durch die Messvorrichtung 100 mit der Objektivanordnung 101 mit der Flüssiglinse 110 und dem Objektiv 120 und der eintrittsseitig abschließenden Vorderblende 140 sowie dem Sensor 130. Zur Vereinfachung der Darstellung ist die Schwenkachse SX in diesen und den nachfolgenden Figuren nicht eingezeichnet. Lediglich beispielhaft ist durch Strahlenbündel B1 bis B3 der Verlauf von Feldstrahlen dargestellt, die unter verschiedenem Winkel zur optischen Achse OA durch die Vorderblende 140 in die Objektivanordnung 101 eintreten.

In den in Figur 3A und Figur 3B dargestellten Ausführungsformen ist die Flüssiglinse 110 objektseitig vom Objektiv 120 zwischen dem Objektiv 120 und der Vorderblende 140 angeordnet. Das Objektiv 120 umfasst mehrere, entlang der optischen Messachse OA linear angeordnete Linsen 121. Die Linsen 121 sind als Rundoptiken mit einem Objektivdurchmesser D ausgebildet. Die optisch wirksamen Flächen der Linsen 121 sind für eine einfache und kostengünstige Fertigung vorzugsweise sphärisch ausgebildet, jedoch können einige oder sogar alle Linsen 121 auch als Asphären ausgebildet sein, um eine besonders hohe, insbesondere eine beugungsbegrenzte Abbildungsgüte zu erzielen.

Beispielsweise kann das Objektiv 120 in einem Tubus gefasst sein, der in den Figuren 3A, 3B nicht dargestellt ist, und der einen freien optischen Durchgang über einen Objektivdurchmesser D von 30 Millimetern ermöglicht. Ein derart (aus Linsen 121 oder Linsengruppen mit einem Objektivdurchmesser D von etwa 30 Millimetern) gebildetes Objektiv 120 kann mit aus dem Stand der Technik bekannten Flüssiglinsen 110 ein Bildfeld unter einem Raumwinkel von etwa 30 Grad erfassen und auf den Sensor 130 abbilden.

Damit kann einerseits eine ausreichend schmale Bauform gewährleistet werden, um mechanische Kollisionen mit dem NED 20 zu vermeiden. Andererseits kann dadurch ein ausreichend großer Teil des Anzeigeelements 21 von einem einzigen Sichtwinkel aus (das heißt: bei unveränderter Ausrichtung der Messvorrichtung 100 gegenüber dem NED 20) vermessen werden.

Zur Vermeidung oder Minderung chromatischer Aberrationen ist es vorteilhaft, Linsen 121 in Baugruppen zusammenzufassen, die als Achromaten wirken. Das Objektiv 120 kann, optional zusammen mit der Flüssiglinse 110, derart mathematisch modelliert werden, dass objektivinterne und/oder in Wechselwirkung mit dem Anzeigeelement 21 und der internen Optik des NEDs 20 auftretende Artefakte und Störungen, beispielsweise Streulicht, Fehllicht oder Mehrfachreflexionen, algorithmisch korrigiert werden können. Dadurch kann das von dem Sensor 130 erfasste Signal optimiert werden, beispielsweise für eine photometrische und/oder eine colorimetrische Messung, für eine Auflösungsmessung, eine Messung des Kontrasts oder eine spektrometrische Messung.

Beispielsweise kann Streulicht derart korrigiert werden, dass der messbare Kontrastumfang algorithmisch erhöht und somit die Performance des Objektivs 120 verbessert wird. Eine solche algorithmische (rechnerische) Verbesserung des auf dem Sensor 130 abgebildeten Bildes ist im Zusammenhang mit der vorliegenden Messaufgabe und der vorgeschlagenen Messvorrichtung 100 deswegen besonders vorteilhaft, weil aufgrund der Beschränkung des Bauraums / der Beweglichkeit Streulicht nicht, wie beispielsweise bei der Vermessung vergleichsweise großer Displays aus vergleichsweise großen Messabständen möglich und üblich, externe physische Blenden eingesetzt werden können.

Indem die Vorderblende 140 objektseitig vor allen optisch wirksamen Komponenten der Messvorrichtung 100 und somit auch vor allen optisch wirksamen Komponenten der Objektivanordnung 101 angeordnet ist, können verschiedene Vorderblenden 140 besonders leicht gegeneinander ausgetauscht werden, die beispielsweise unterschiedliche Blendendurchmesser aufweisen. Alternativ oder zusätzlich kann die Vorderblende 140 als Wechselblende ausgestaltet sein, bei der verschiedene Blendenöffnungen wahlweise in den Strahlengang gesetzt werden können. Es ist auch möglich, die Vorderblende 140 als Irisblende mit variablem, insbesondere stufenlos verstellbarem Irisdurchmesser auszugestalten. Besonders vorteilhaft kann eine solche Irisblende motorisch betrieben werden.

Dadurch ist es möglich, Messungen am NED 20 vorzunehmen, die Nutzungssituationen mit verschieden adaptierten Augen (beispielsweise für skotopisches Sehen mit weit geöffneter Augenpupille bei einem Augenpupillendurchmesser von zwischen fünf und sechs Millimetern und für photopisches Sehen mit enger Augenpupille bei einem Augenpupillendurchmesser von zwischen einem und zwei Millimetern) entsprechen.

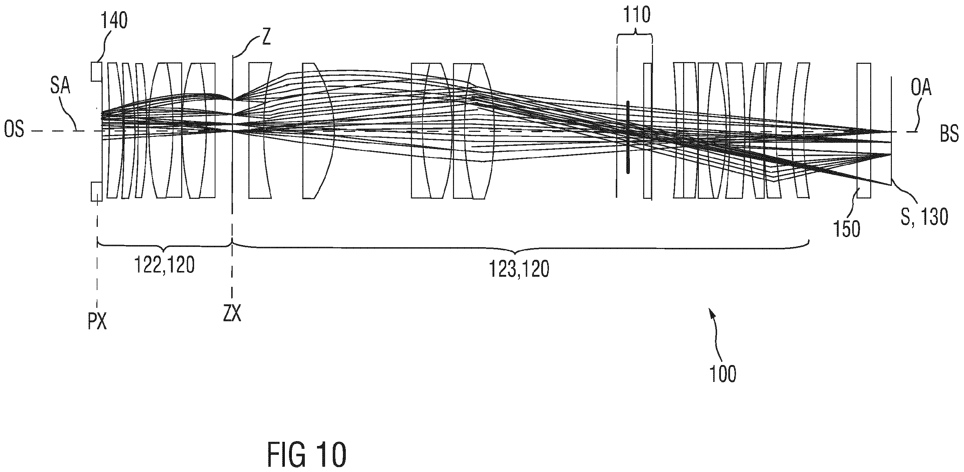

In den Ausführungsformen nach Figur 3A und 3B ist die Flüssiglinse 110 zwischen der Vorderblende 140 und dem Objektiv 120 angeordnet. Dadurch kann eine besonders kostengünstige und einfache Flüssiglinse 110 mit einem Durchmesser eingesetzt werden, der kleiner als der Objektivdurchmesser D ist. Es ist jedoch auch möglich, die Flüssiglinse 110 an einem anderen Ort entlang der optischen Achse OA, beispielsweise innerhalb des Objektivs 120 unter Anpassung der Linsenanordnung in dem Objektiv 120 anzuordnen. Eine derartige Anordnung wird nachfolgend anhand von Figur 10 noch genauer erläutert.

Die Flüssiglinse 110 kann als elektrisch ansteuerbare Linse ausgebildet sein, deren Brechkraft über eine angelegte elektrische Spannung (spannungsgesteuerte Flüssiglinse 110) oder über einen elektrischen Strom (stromgesteuerte Flüssiglinse 110) verändert werden kann. Spannungsgesteuerte Flüssiglinsen 110 sind beispielsweise in einer von der Firma Corning bereitgestellten Ausführungsform A-58N bekannt und verfügbar. Stromgesteuerte Flüssiglinsen 110 sind beispielsweise in einer von der Firma Optotune als EL-10-30-TC bekannt und verfügbar.

Es sind auch Flüssiglinsen 110 bekannt und einsetzbar, deren Brechkraft durch manuelle mechanische Betätigung verändert wird.

Die Brechkraftveränderung der Flüssiglinse 110 kann entsprechend ihrer Ausführungsform manuell mechanisch, manuell elektronisch oder durch einen Autofokusalgorithmus gesteuert werden. Elektronisch verstellbare Flüssiglinsen 110 können sehr schnell, typischerweise innerhalb weniger Millisekunden, in ihrer Brechkraft verändert werden.

In einer Ausführungsform ist die Flüssiglinse 110 über die Veränderung ihrer Brennweite hinaus auch derart in ihrer optischen Wirkung veränderbar, dass Aberrationen höherer Ordnung des Objektivs 120 korrigiert werden können. In besonders vorteilhafter Weise kann dabei das Objektiv 120 besonders einfach und kompakt gestaltet werden. Aberrationen eines einfachen Objektivs 120 können dann mittels einer solchen Flüssiglinse 110 kompensiert werden. Dadurch kann die optische Leistung der gesamten Objektivanordnung 101 weiter verbessert werden.

In der Ausführungsform nach Figur 3A sind die Linsen 121 so ausgebildet und angeordnet, dass ein bildseitig entozentrischer Strahlengang bewirkt wird. Diese Ausführungsform hat den Vorteil, dass durch Verschiebung der Sensorebene S entlang der optischen Messachse OA der Abbildungsmaßstab verändert werden kann. Insbesondere kann durch eine Verschiebung in Richtung der Bildseite BS die Bildgröße auf dem Sensor 130 vergrößert werden. So kann für verschiedene Größen des Sensors 130 (beispielsweise für unterschiedlich große Complementary Metal Oxide Semiconductor (CMOS) oder Charged Coupled Device (CCD) Pixelmatrizen) eine jeweils optimierte Abbildung erzeugt werden.

Insbesondere kann eine Abbildung auch für einen Sensor 130 erzeugt werden, dessen Chipfläche über den Objektivdurchmesser D des Objektivs 120 hinausragt. Dadurch können für die Messvorrichtung 100 bei aus vorstehend erläuterten Gründen beschränkter Größe des Objektivs 120 besonders große und hochauflösende Sensoren 130 verwendet werden, mit denen eine hinsichtlich der Ortsauflösung besonders genaue Messung möglich ist.

In der Ausführungsform nach Figur 3B sind die Linsen 121 so ausgebildet und angeordnet, dass ein bildseitig telezentrischer Strahlengang erzeugt wird. Diese Ausführungsform hat den Vorteil, dass der Abbildungsmaßstab der Projektion auf den Sensor 130 unabhängig von dessen Position entlang der optischen Messachse OA gleichbleibt. Eine derartige Ausführungsform ist daher besonders robust gegenüber Toleranzen und Abweichungen bei der Anordnung oder Montage des Sensors 130 relativ zum Objektiv 120.

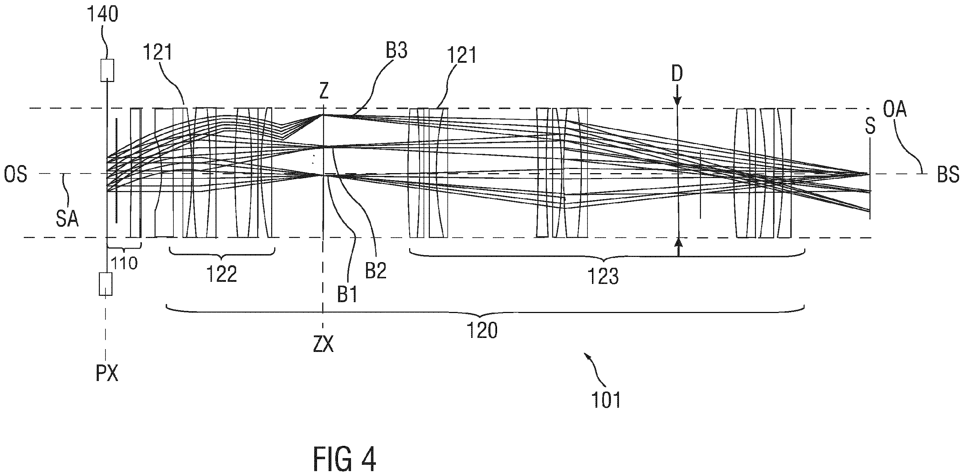

**Figur 4** zeigt schematisch eine Ausführungsform einer Objektivanordnung 101, bei der das Objektiv 120 in eine erste (objektseitig angeordnete) und zweite (bildseitig angeordnete) Objektivgruppe 122, 123 aufgeteilt ist, die baulich getrennt (beispielsweise in unabhängigen Fassungen gefasst) sein können. Die erste Objektivgruppe 122 erzeugt in einer Zwischenebene Z, die senkrecht zur optischen Messachse OA zwischen den Objektivgruppen 122, 123 an einer Zwischenbildposition ZX liegt, ein Zwischenbild. Die zweite Objektivgruppe 123 bildet dieses Zwischenbild auf die erste Sensorebene S ab.

Durch die Auftrennung des Objektivs 120 ist es möglich, auch die Objektivanordnung 101 und die Messvorrichtung 100 baulich derart aufzutrennen, dass nur eine (verglichen mit einer monolithischen Ausführung der Objektivanordnung 101) kleinere Baugruppe umfassend die erste Objektivgruppe 122, die Flüssiglinse 110 und die Vorderblende 140 in unmittelbarer Nähe des NEDs 20 angeordnet werden muss, während die zweite Objektivgruppe 123 davon abgesetzt angeordnet werden kann. Dadurch kann die zweite Objektivgruppe 123 vergleichsweise größer ausgestaltet werden als bei einer monolithischen Ausführung (das heißt: einer Fassung des gesamten Objektivs 120 in einer einzigen mechanischen Einheit, beispielsweise in einem Tubus), ohne in Konflikt mit den mechanischen und/oder optischen Beschränkungen durch die Bauform des NEDs 20 zu geraten.

Durch diese Verlängerung des optischen Pfads aus dem vom NED 20 und dessen Haltevorrichtungen umschlossenen Raum hinaus kann auch ein vergrößerter Sensor 130 verwendet werden. Damit kann/können die örtliche Auflösung und/oder die Empfindlichkeit der Messung verbessert werden.

Zudem kann die zweite Objektivgruppe 123 zusätzliche Linsen 121 zur Korrektur von Abbildungsfehlern umfassen. Beispielsweise kann die erste Objektivgruppe 122 zwar frei von refraktiven Fehlern erster Ordnung, aber nicht frei von refraktiven Fehlern höherer Ordnung (beispielsweise Astigmatismus oder Coma) ausgestaltet und dadurch einfach und klein gebaut werden. Die zweite, nachgeordnete Objektivgruppe 123 kann zur Korrektur der refraktiven Fehler höherer Ordnung und/oder zur verbesserten Korrektur chromatischer Aberrationen ausgestaltet werden. Dadurch kann insgesamt, unter Berücksichtigung des beschränkten Bauraums unmittelbar am NED 20, die Qualität der Abbildung auf dem Sensor 130 und somit die Genauigkeit einer Messung verbessert werden.

Die zweite Objektivgruppe 123 kann als teleskopische Anordnung realisiert sein. Sie kann sowohl bildseitig als auch objektseitig telezentrisch oder entozentrisch realisiert sein. Bevorzugt ist die zweite Objektivgruppe 123 auf die erste Objektivgruppe 122 sowie auf die Flüssiglinse 110 zur Minimierung von Aberrationen abgestimmt.

Die in Figur 4 dargestellte Ausführungsform mit zwei Objektivgruppen 122, 123 weist die Einschränkung auf, dass aus der ersten Objektivgruppe 122 austretende Feldstrahlen, die sich in der Zwischenebene Z schneiden (das heißt: leuchtende Punkte des Anzeigeelements 21 des NEDs 20 in der Zwischenebene Z scharf abbilden) bildseitig jenseits der Zwischenebene Z divergieren und daher nur dann als vollständiges Strahlenbündel B1 bis B3 in die zweite Objektivgruppe 123 eintreten, wenn die (in Figur 4 nicht gekennzeichnete) erste Austrittspupille AP1 der ersten Objektivgruppe 122 gleich groß zur (in Figur 4 nicht gekennzeichneten) zweiten Eintrittspupille EP2 der zweiten Objektivgruppe 123 ist.

Für eine effiziente Ausnutzung des Bauraums der Messvorrichtung 100 ist es vorteilhaft, die erste Austrittspupille AP1 und die zweite Eintrittspupille EP2 in der Größe aufeinander abzustimmen, insbesondere gleich groß zu machen. Hierzu können die erste und die zweite Objektivgruppe 122, 123 aneinander angepasst werden.

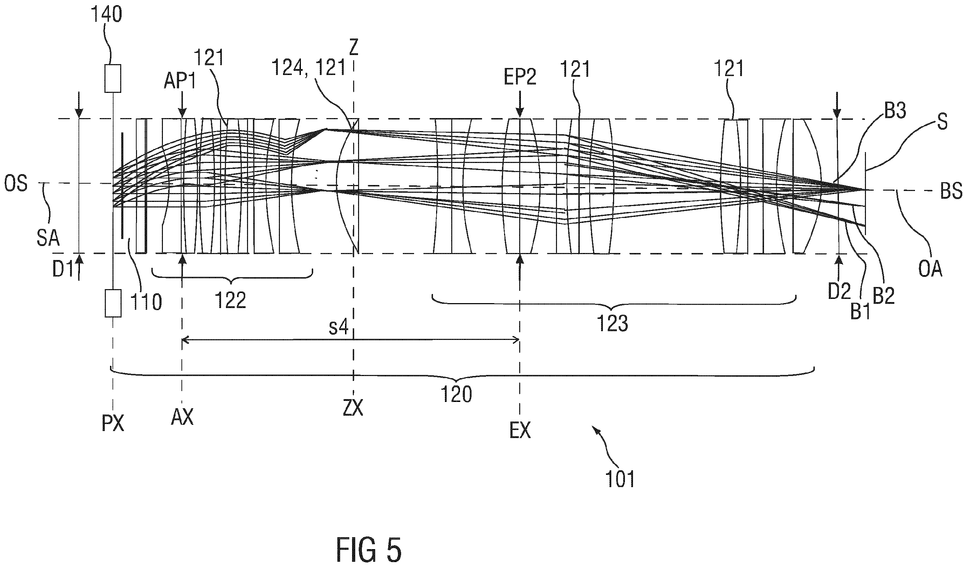

Die in **Figur 5** dargestellte Ausführungsform weist demgegenüber zusätzlich eine Feldlinse 124 auf, die in oder nahe bei der Zwischenebene Z angeordnet ist. Die Feldlinse 124 bildet die erste Austrittspupille AP1 der ersten Objektivgruppe 122 auf die zweite Eintrittspupille EP2 der zweiten Objektivgruppe 123 ab. In Figur 5 sind die erste Austrittspupille AP1 der ersten Objektivgruppe 122 schematisch und lediglich beispielhaft an der Austrittspupillenposition AX und die zweite Eintrittspupille EP2 der zweiten Objektivgruppe 123 schematisch und lediglich beispielhaft an der Eintrittspupillenposition EX dargestellt.

Mit der Feldlinse 124 können verschieden große, insbesondere aber auch gleich große Pupillen AP1, EP2 der Objektivgruppen 122, 123 aufeinander abgebildet werden. Dadurch können beispielsweise die Objektivdurchmesser D1, D2 der ersten beziehungsweise zweiten Objektivgruppe 122, 123 gleich groß gewählt werden. Dadurch kann Bauraum gespart werden und ein Objektiv 120 mit einem einzigen, vollständig genutzten Objektivdurchmesser D1, D2 realisiert werden, der dem abzubildenden Objektfeld entspricht.

Zugleich oder stattdessen kann der Abstand (entlang der optischen Achse OA) zwischen den Objektivgruppen 122, 123 variiert werden, in Figur 5 beispielhaft und schematisch als Abstand zwischen den Pupillen AP1, EP2 dargestellt. Dadurch ist eine flexiblere Gestaltung der Objektivgruppen 122, 123 möglich. Insbesondere ist aber auch, indem die Eintrittspupille EP2 der zweiten Objektivgruppe 123 nicht der Bauraumbeschränkung durch das NED 20 unterliegt, der Entwurf einer zweiten Objektivgruppe 123 mit verbesserter optischer Qualität möglich.

Die Feldlinse 124 kann über die Abbildung der Pupillen AP1, EP2 hinaus weitere optische Wirkungen aufweisen und beispielsweise für die Korrektur eines astigmatischen Abbildungsfehlers, einer Bildfeldwölbung und/oder eines anderen Abbildungsfehlers, vorzugsweise eines Abbildungsfehlers höherer Ordnung, eingerichtet sein, während die erste Objektivgruppe 122 vereinfacht lediglich zur Vermeidung oder Minimierung von Abbildungsfehlern niederer Ordnung (beispielsweise sphärischer Abbildungsfehler) ausgelegt werden kann. Dadurch können der für die erste Objektivgruppe 122 erforderliche Bauraum klein gehalten und die optische Qualität der Objektivanordnung 101 insgesamt verbessert werden.

Der in Figur 5 dargestellte Strahlengang ist (bildseitig) entozentrisch. Es ist aber ebenso ein telezentrischer Strahlengang umsetzbar.

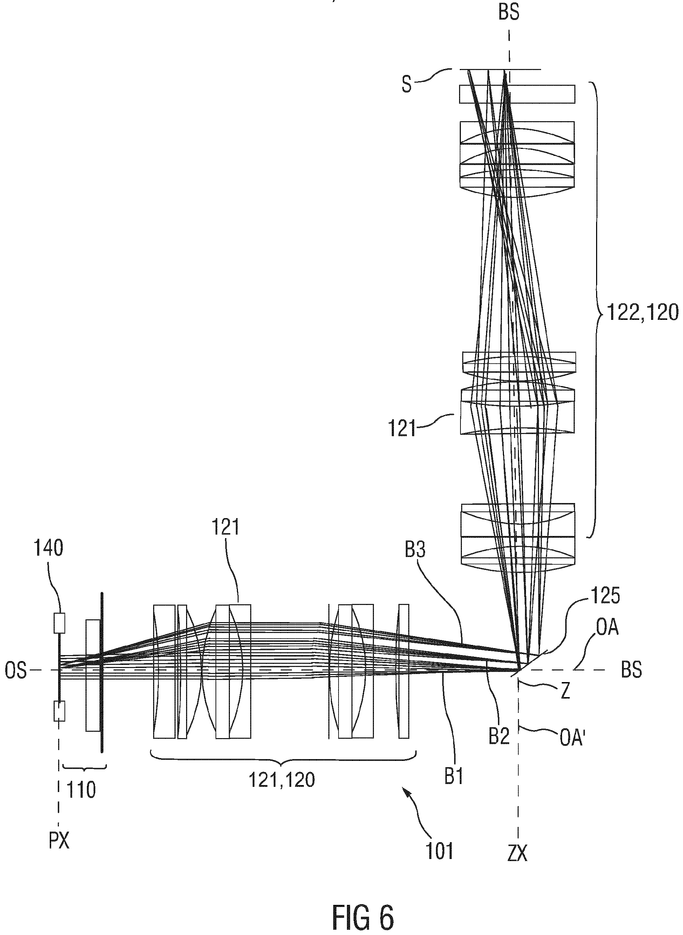

**Figur 6** zeigt schematisch eine Weiterbildung einer Objektivanordnung 101 einer Messvorrichtung 100 mit einem in zwei Objektivgruppen 122, 123 aufgetrennten Objektiv 120, bei der an der Zwischenbildposition ZX ein Strahlumlenker 125 angeordnet ist, der als Umlenkspiegel 125 ausgebildet ist. Vorzugsweise ist der Umlenkspiegel 125 in einem Winkel von 45 Grad zur optischen Messachse OA der ersten Objektivgruppe 122 und zur optischen Messachse OA` der zweiten Objektivgruppe 123 geneigt, mit anderen Worten: die optischen Achsen OA, OA` der ersten und der zweiten Objektivgruppe 122, 123 liegen senkrecht zueinander, wobei die optische Achse OA der ersten Objektivgruppe 122 im Wesentlichen der Sehachse SA eines Auges entspricht, entlang der ein Betrachter das von dem vermessenen NED 20 projizierte Bild wahrnimmt.

Ein Vorteil dieser Weiterbildung besteht darin, dass entlang der Sehachse SA eines NEDs 20 nur wenig Bauraum beansprucht wird, da die erste Objektivgruppe 122 klein gestaltet werden kann. Dadurch ist auch die Vermessung von NEDs 20 mit besonders engen Beschränkungen entlang ihrer Sehachse SA möglich, beispielsweise wenn derartige NEDs 20 mit Kopfbändern 23 oder Tragegestellen versehen sind, die in geringem Abstand von dem Anzeigeelement 21 in die Sehachse SA hineinragen.

An Stelle des Umlenkspiegels 125 kann auch ein Umlenkprisma (Reflexionsprisma) als Strahlumlenker 125 verwendet werden.

Der in Figur 6 dargestellte Strahlengang ist (bildseitig) entozentrisch. Es ist aber ebenso ein telezentrischer Strahlengang umsetzbar.

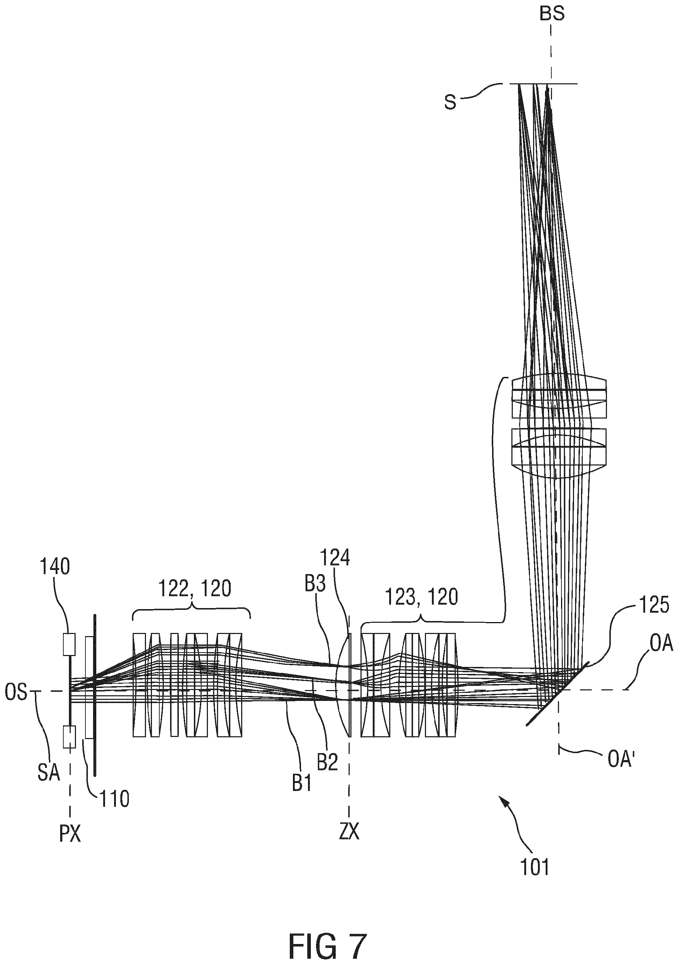

**Figur 7** zeigt eine alternative Ausführungsform eines mit einem Umlenkspiegel 125 umgelenkten Strahlengangs. Hier ist der Umlenkspiegel 125 statt an der Zwischenbildposition ZX (das heißt: objektseitig vor der zweiten Objektivgruppe 123) innerhalb der zweiten Objektivgruppe 123 angeordnet. Durch die dadurch ermöglichte Anordnung einer Feldlinse 124 an der Zwischenbildposition ZX können die bereits anhand von Figur 5 erläuterten Vorteile der Feldlinse 124 zusätzlich zu den anhand von Figur 6 erläuterten Vorteilen eines mit einem Umlenkspiegel 125 gefalteten (umgelenkten) Strahlengangs erzielt werden.

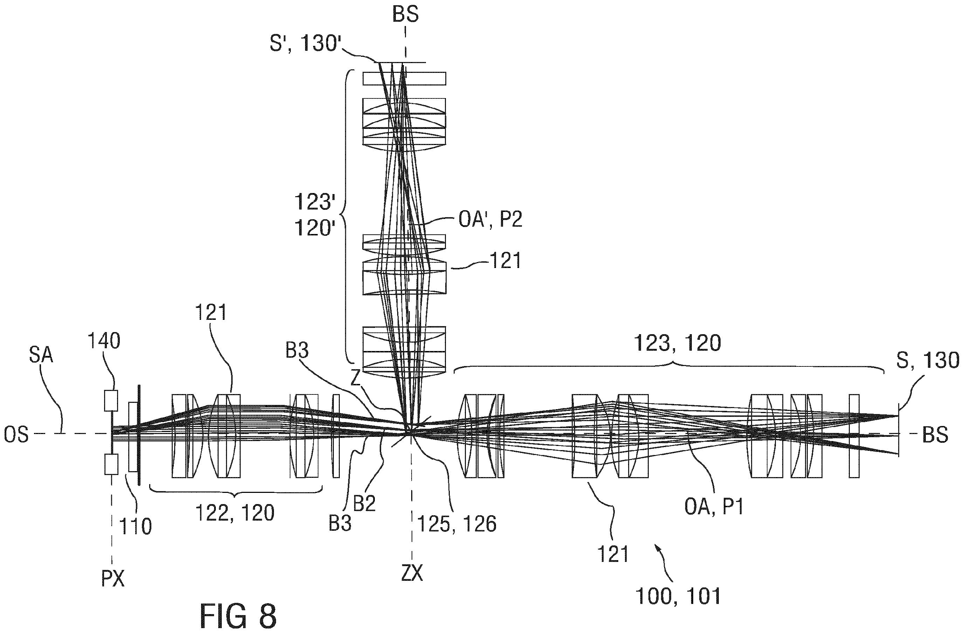

**Figur 8** stellt schematisch einen Strahlengang in einer Objektivanordnung 101 einer Messvorrichtung 100 dar, der mittels eines Strahlteilers 126 in zwei zueinander senkrecht verlaufende Teilstrahlengänge aufgeteilt ist.

Entlang eines ersten optischen Pfads P1 ist bildseitig vom Strahlteiler 126 eine zweite Objektivgruppe 123 angeordnet, die das Zwischenbild Z auf eine erste Sensorebene S abbildet. Zusätzlich ist entlang eines zweiten optischen Pfads P2 bildseitig vom Strahlteiler 126 eine weitere zweite Objektivgruppe 123' angeordnet, die das Zwischenbild Z auf eine zweite Sensorebene S' abbildet. Der erste optische Pfad P1 verläuft entlang der ersten optischen Messachse OA kollinear zur Sehachse SA. Der zweite optische Pfad P2 verläuft entlang einer zweiten optischen Messachse OA`, die senkrecht zur ersten optischen Messachse OA / Sehachse SA liegt. Bei der in Figur 8 dargestellten Ausführungsform wird der aus der ersten Objektivgruppe 122 austretende Strahlengang über die gesamte Apertur (das heißt: für sämtliche aus der ersten Objektivgruppe 122 austretende Strahlenbündel B1 bis B3) auf den ersten und den zweiten optischen Pfad P1, P2 aufgetrennt.

Der in der Zwischenbildposition ZX angeordnete Strahlteiler 126 kann beispielsweise als teildurchlässiger Umlenkspiegel 125 oder als teilreflektierendes Umlenkprisma ausgebildet sein.

Durch die Teilung des Strahlengangs können in jeder der zwei Sensorebenen S, S' jeweils ein Sensor 130, 130` angeordnet werden, die voneinander unabhängige Messungen vornehmen. Beispielsweise kann der erste, am bildseitigen Ende des ersten optischen Pfads P1 angeordnete Sensor 130 als Leuchtdichtemesskamera ausgebildet sein. Der zweite, am bildseitigen Ende des zweiten optischen Pfads P2 angeordnete Sensor 130` kann beispielsweise als Farbmesskamera, Lichtfeldkamera, Machine Vision Kamera oder als Spektrometer ausgebildet sein.

Die Ausführungsform gemäß Figur 8 bietet somit den Vorteil, dass synchron verschiedene Messungen an einem NED 20 vorgenommen werden können.

Die Anordnung des Strahlteilers 126 an der Zwischenbildposition ZX ermöglicht eine einfache geometrische Zuordnung der von den Sensoren 130, 130` aufgefangenen Bilder zueinander und zum Objektraum (das heißt: zum Anzeigeelement 21 eines NEDs 20). Dadurch kann, wenn einer der Sensoren 130, 130` als Spektrometer ausgebildet ist, beispielsweise eine örtlich determinierte spektrale Messung erfolgen.

Es ist aber auch möglich, den Strahlteiler 126 an einer anderen Position bildseitig von der Zwischenbildposition ZX, beispielsweise nach einer oder mehreren Linsen 121 der zweiten Objektivgruppe 123, anzuordnen und dadurch die Anordnung einer Feldlinse 124 in der Zwischenbildposition ZX mit den bereits beschriebenen Vorteilen zu ermöglichen.

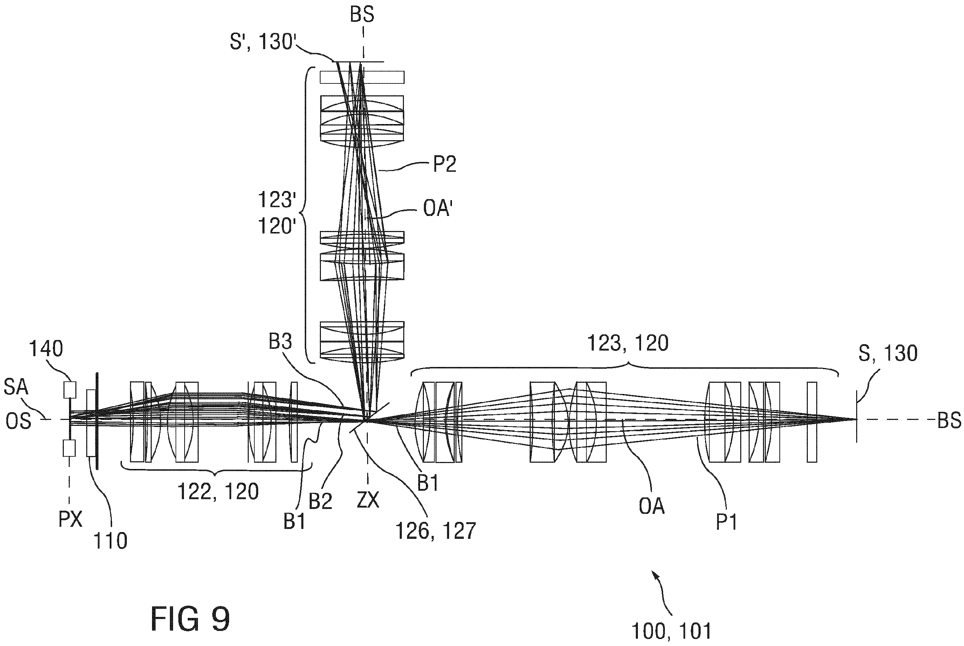

**Figur 9** zeigt eine Ausführungsform einer Messvorrichtung 100 mit einer Objektivanordnung 101 mit analog zu Figur 8 geteiltem Strahlengang. Im Unterschied zu Figur 8 wirkt der Strahlteiler 126 hier nur über einen Teil der Austrittsapertur AP der ersten Objektivgruppe 122. Mit anderen Worten: es werden nur einige, nicht alle Strahlenbündel B1 bis B3 entlang des ersten optischen Pfads P1 auf den ersten Sensor 130 geteilt.

Lediglich beispielhaft und schematisch sind in Figur 9 ein erstes bis drittes Strahlenbündel B1 bis B3 dargestellt, welche entlang des zweiten optischen Pfads P2 auf den zweiten Sensor 130` umgelenkt werden, wobei nur das zentrale erste Strahlenbündel B1, das auf den Schnittpunkt der ersten optischen Achse OA mit der Zwischenebene Z fokussiert, teilweise auch über den ersten optischen Pfad P1 an den ersten Sensor 130 geleitet wird.

Ein derartiger Strahlverlauf kann beispielsweise mit einem als Lochspiegel 127 oder als teilverspiegeltem (das heißt: nur bereichsweise vollständig reflektierendem) Umlenkspiegel 125 ausgebildeten Strahlteiler 126 erzielt werden.

**Figur 10** zeigt eine weitere Ausführungsform mit zwei Objektivgruppen 122, 123, sowie gefaltetem (umgelenktem), jedoch ungeteiltem Strahlengang analog zu den in den Figuren 4 und 5 dargestellten Ausführungsformen. Im Unterschied zu diesen bereits erläuterten Ausführungsformen ist vorliegend die Flüssiglinse 110 nicht zwischen der Vorderblende 140 und dem Objektiv 120, sondern innerhalb des Objektivs 120 in der zweiten Objektivgruppe 123 angeordnet. Ein Vorteil dieser Anordnung besteht darin, dass die Anforderungen an den Bauraum für die zweite Objektivgruppe 123 gegenüber einer Anordnung zwischen der ersten (nahe am NED 20 positionierten) Objektivgruppe 122 und der Vorderblende 140 entspannt sind.

Ferner weist die Ausführungsform nach Figur 10 zusätzlich ein optisches Filter 150 auf, das vorliegend unmittelbar objektseitig vor der Sensorebene S angeordnet ist, jedoch auch an anderen Stellen in den Strahlengang eingefügt werden kann. Das optische Filter 150 kann beispielsweise als colorimetrisches Filter oder als photometrisches Filter ausgebildet sein, um colorimetrische beziehungsweise photometrische Messungen mit dem Sensor 130 zu ermöglichen.

Bei einer Ausführungsform mit geteiltem Strahlengang (beispielsweise gemäß Figur 8 oder 9) können analog mehrere, gleich oder unterschiedlich ausgebildete optische Filter 150 verwendet werden, von denen jeweils einer in einem der optischen Pfade P1, P2 angeordnet wird.

### BEZUGSZEICHENLISTE

- 20: Near Eye Device (NED)
- 21: Anzeigeelement
- 22: Brillenbügel
- 23: Kopfband
- 100: Messvorrichtung
- 101: Objektivanordnung
- 110: Flüssiglinse, Linse
- 120: Objektiv
- 121: Linse
- 122,: erste Objektivgruppe
- 123, 123': zweite Objektivgruppe
- 124: Feldlinse, Linse
- 125: Umlenkspiegel, Strahlumlenker
- 126: Strahlteiler
- 127: Lochspiegel
- 130, 130`: erster, zweiter Sensor
- 140: Vorderblende
- 150: Filter (photometrisch, colorimetrisch)
- AP1: erste Austrittspupille, Pupille
- AX: Austrittspupillenposition
- B1, B2, B3: erstes bis drittes Strahlenbündel
- BS: Bildseite
- D1, D2, D: erster, zweiter Objektivdurchmesser, Durchmesser
- EP: System-Eintrittspupille
- EP2: zweite Eintrittspupille, Pupille
- EX: Eintrittspupillenposition
- OA, OA`: erste, zweite optische Messachse, optische Achse
- OS: Objektseite
- P1, P2: erster, zweiter optischer Pfad (Strahlengang)
- PX: Pupillenposition
- S, S': erste, zweite Sensorebene
- s1, s3: Abstand
- s2: Bildabstand, Abstand
- SA: Sehachse, optische Achse
- SX: Schwenkachse
- V: virtuelles Bild
- VX: Bildposition
- VΔ: Fokusbereich
- Z: Zwischenebene
- ZX: Zwischenbildposition
- *α*: Schwenkwinkel

## Patentansprüche

1. Objektivanordnung (101) umfassend eine Vorderblende (140), ein Objektiv (120) und eine Flüssiglinse (110), wobei das Objektiv (120) und die Flüssiglinse (110) entlang einer optischen Achse (OA, OA`) an bezogen auf die Vorderblende (140) auf einer Bildseite (BS) liegenden Positionen fest angeordnet und zur Abbildung eines auf einer gegenüberliegenden Objektseite (OS) dargebotenen NED-Abbildungsstrahlengangs in mindestens einer Sensorebene (S, S') eingerichtet sind,
- wobei die Flüssiglinse (110) in ihrer optischen Wirkung derart verstellbar ist, dass von einem menschlichen Betrachter scharf wahrnehmbare NED-Abbildungsstrahlengänge durch Anpassung der Flüssiglinse (110) scharf in der mindestens einen Sensorebene (S, S') abbildbar sind,
- wobei die Vorderblende (140) als Aperturblende für eine System-Eintrittspupille (EP) der Objektivanordnung (101) ausgebildet ist und eine Blendenöffnung von zwischen zwei Millimetern und sechs Millimetern aufweist
- und wobei das Objektiv (120) eine erste Objektivgruppe (122) zur Abbildung eines auf einer gegenüberliegenden Objektseite (OS) in einem Bildabstand (s2) vor der Vorderblende (140) dargebotenen virtuellen Bildes (V) in ein Zwischenbild in einer Zwischenebene (Z) und mindestens eine davon baulich getrennte, im Strahlengang nachgeordnete zweite Objektivgruppe (123) zur Abbildung dieses Zwischenbildes in die mindestens eine Sensorebene (S, S') umfasst.

2. Objektivanordnung (101) nach Anspruch 1, wobei das Objektiv (120) und die Flüssiglinse (110) zur Abbildung des virtuellen Bildes (V) in mindestens einer Sensorebene (S, S') eingerichtet sind, wobei die Flüssiglinse (110) in ihrer optischen Wirkung derart verstellbar ist, dass in einem Fokusbereich (VΔ) dargebotene virtuelle Bilder (V) durch Anpassung der Flüssiglinse (110) scharf in der mindestens einen Sensorebene (S, S') abbildbar sind.

3. Objektivanordnung (101) nach einem der vorhergehenden Ansprüche, **dadurch gekennzeichnet, dass** die Vorderblende (140) als Wechselblende mit diskret verstellbarer Blendenöffung oder als Irisblende mit stufenlos verstellbarer Blendenöffnung ausgebildet ist.

4. Objektivanordnung (101) nach einem der vorhergehenden Ansprüche, **dadurch gekennzeichnet, dass** die Flüssiglinse (110) bildseitig zwischen der Vorderblende (140) und dem Objektiv (120) angeordnet ist.

5. Objektivanordnung (101) nach einem der vorhergehenden Ansprüche, **dadurch gekennzeichnet, dass** die Flüssiglinse (110) und das Objektiv (120) einen Durchmesser (D) von höchstens 32,5 Millimetern aufweisen.

6. Objektivanordnung (101) nach einem der vorhergehenden Ansprüche, **dadurch gekennzeichnet, dass** das Objektiv (120) für einen bildseitig entozentrischen Strahlengang oder für einen bildseitig telezentrischen Strahlengang eingerichtet ist.

7. Objektivanordnung (101) nach einem der vorhergehenden Ansprüche, **dadurch gekennzeichnet, dass** in der Zwischenebene (Z) eine Feldlinse (124) angeordnet ist, die zur Anpassung einer ersten Austrittspupille (AP1) der ersten Objektivgruppe (122) an eine zweite Eintrittspupille (EP2) der zweiten Objektivgruppe (123) und/oder zur Korrektur einer Aberration eingerichtet ist.

8. Objektivanordnung (101) nach einem der vorhergehenden Ansprüche, **dadurch gekennzeichnet, dass** mittels mindestens eines Strahlumlenkers (125) der Strahlengang mindestens eines optischen Pfads (P1, P2) mindestens abschnittsweise gegenüber einer ersten, senkrecht durch die Vorderblende (140) verlaufenden optischen Achse (OA) geneigt und/oder versetzt verlaufend umgelenkt wird.

9. Objektivanordnung (101) nach einem der vorhergehenden Ansprüche, **dadurch gekennzeichnet, dass** im Strahlengang bildseitig nach der Flüssiglinse (110) mindestens ein Strahlteiler (126) derart angeordnet ist, dass er den Strahlengang in örtlich korrespondierende Abbildungen des virtuellen Bildes (V) entlang eines ersten optischen Pfads (P1) auf eine erste Sensorebene (S) sowie entlang mindestens eines weiteren optischen Pfads (P2) auf jeweils eine weitere Sensorebene (S`) aufteilt.

10. Messvorrichtung (100) zur Vermessung eines Near Eye Device (NED) (20) umfassend
- eine Objektivanordnung (101) umfassend eine Vorderblende (140), ein Objektiv (120) und eine Flüssiglinse (110), wobei das Objektiv (120) und die Flüssiglinse (110) entlang einer optischen Achse (OA, OA`) an bezogen auf die Vorderblende (140) auf einer Bildseite (BS) liegenden Positionen fest angeordnet und zur Abbildung eines auf einer gegenüberliegenden Objektseite (OS) dargebotenen NED-Abbildungsstrahlengangs in mindestens einer Sensorebene (S, S') eingerichtet sind,
- wobei die Flüssiglinse (110) in ihrer optischen Wirkung derart verstellbar ist, dass von einem menschlichen Betrachter scharf wahrnehmbare NED-Abbildungsstrahlengänge durch Anpassung der Flüssiglinse (110) scharf in der mindestens einen Sensorebene (S, S') abbildbar sind,
- wobei die Vorderblende (140) als Aperturblende für eine System-Eintrittspupille (EP) der Objektivanordnung (101) ausgebildet ist und eine Blendenöffnung von zwischen zwei Millimetern und sechs Millimetern aufweist sowie
- mindestens einen, in jeweils einer Sensorebene (S, S') angeordneten, für eine photometrische und/oder colorimetrische und/oder spektrometrische Vermessung des NEDs (20) eingerichteten Sensor (130, 130`), wobei
- in mindestens einem optischen Pfad (P1, P2) ein optisches Filter (150) angeordnet ist, das als photometrisches oder als colorimetrisches Filter (150) eingerichtet ist.

11. Messvorrichtung (100) nach Anspruch 10, **dadurch gekennzeichnet, dass** die Messvorrichtung (100) entlang einer Schwenkachse (SX) schwenkbar ist, die eine senkrecht durch die Vorderblende (140) verlaufende erste optische Achse (OA) bildseitig senkrecht in einem Abstand (s3) zur Vorderblende (140) schneidet, der näherungsweise gleich dem typischen Abstand des Drehpunktes eines menschlichen Auges von dessen Augenpupille ist.

12. Messvorrichtung (100) nach einem der Ansprüche 10 oder 11, **dadurch gekennzeichnet, dass** eine erste Objektivanordnung (101) zur Abbildung eines ersten Abbildungsstrahlengangs eines binokularen NEDs (20) auf mindestens einen, in jeweils einer Sensorebene (S, S') angeordneten, für eine photometrische und/oder colorimetrische und/oder spektrometrische Vermessung des NEDs (20) eingerichteten Sensor (130, 130`) und eine zweite Objektivanordnung (101) zur Abbildung eines zweiten Abbildungsstrahlengangs des binokularen NEDs (20) auf mindestens einen, in jeweils einer Sensorebene (S, S') angeordneten, für eine photometrische und/oder colorimetrische und/oder spektrometrische Vermessung des NEDs (20) eingerichteten Sensor (130, 130`) angeordnet und eingerichtet sind.

13. Verfahren zur lichttechnischen Vermessung eines NEDs (20) mit einer Messvorrichtung (100) zur Vermessung eines Near Eye Device (NED) (20) umfassend
- eine Objektivanordnung (101) umfassend eine Vorderblende (140), ein Objektiv (120) und eine Flüssiglinse (110), wobei das Objektiv (120) und die Flüssiglinse (110) entlang einer optischen Achse (OA, OA`) an bezogen auf die Vorderblende (140) auf einer Bildseite (BS) liegenden Positionen fest angeordnet und zur Abbildung eines auf einer gegenüberliegenden Objektseite (OS) dargebotenen NED-Abbildungsstrahlengangs in mindestens einer Sensorebene (S, S') eingerichtet sind,
- wobei die Flüssiglinse (110) in ihrer optischen Wirkung derart verstellbar ist, dass von einem menschlichen Betrachter scharf wahrnehmbare NED-Abbildungsstrahlengänge durch Anpassung der Flüssiglinse (110) scharf in der mindestens einen Sensorebene (S, S') abbildbar sind,
- wobei die Vorderblende (140) als Aperturblende für eine System-Eintrittspupille (EP) der Objektivanordnung (101) ausgebildet ist und eine Blendenöffnung von zwischen zwei Millimetern und sechs Millimetern aufweist sowie
- mindestens einen, in jeweils einer Sensorebene (S, S') angeordneten, für eine photometrische und/oder colorimetrische und/oder spektrometrische Vermessung des NEDs (20) eingerichteten Sensor (130, 130`), **dadurch gekennzeichnet, dass** mindestens eine in Wechselwirkung des NEDs (20) mit der Objektivanordnung (101) auftretende optische Störung durch Auswertung der mit dem mindestens einen Sensor (130, 130`) erfassten Messung rechnerisch korrigiert wird.
